# EUROPEAN PATENT APPLICATION

(11) **EP 1 638 104 A2**
(43) Date of publication of application: **22.03.2006**
(21) Application number: 04258104.1
(22) Date of filing: 23.12.2004
(51) Int. Cl.: G11B 27/19, G11B 27/30, G11B 27/24

(54) **Information recording -reproducing apparatus and method**

(30) Priority: 17.09.2004 JP 2004272002
(71) Applicant: FUJITSU LIMITED, Kawasaki-shi, Kanagawa 211-8588 (JP)
(72) Inventor: Suzuki, Tomoya, Kasugai-shi Aichi 487-0013 (JP)
(74) Representative: Stebbing, Timothy Charles

(57) **Abstract**

An information recording-reproducing apparatus and method is provided wherein control information sequence (ADIP address) is read out based on the detection of a sync mark and whereby the recovery from the state where control information sequence cannot be restored can be quickened and the speed and efficiency of reading of control information sequence can be increased for improving readability. Data bits and sync marks are monitored for detection failure by comparing the information expected to be detected and that actually detected. When reading of the ADIP is started by the detection of a sync mark, if a data bit detection failure is detected in one word of ADIP address and an sync information detection failure is detected when the next ADIP address is read, this is judged to be a data bit detection failure resulting from a sync information detection failure and a sync information reread operation can be started.

## Description

This application is based upon and claims the benefit of priority from each of the prior Japanese Patent Application No. 2004-272002 filed on September 17, 2004.

This invention relates to an information recording-reproducing apparatus and method, and more particularly to an information recording-reproducing apparatus and method wherein control information sequence is read out according to synchronization timing based on the detection of a synchronization mark.

Various writeable optical disk formats are known such as DVD+R and +RW.

In a DVD+R (DVD-Recordable) that allows additional recording of information and a DVD+RW (DVD-ReWritable)that allows rewriting of information, information is recorded on a groove track, which is an information recording track sandwiched between land tracks used for guiding a light source such as a laser beam. On the boundary area between the land track and groove track, called a wobble, Address In Pregroove (hereinafter referred to as ADIP) is prerecorded. Reproducing one word of this ADIP brings one physical address and a write or read operation is performed using this physical address as the guide.

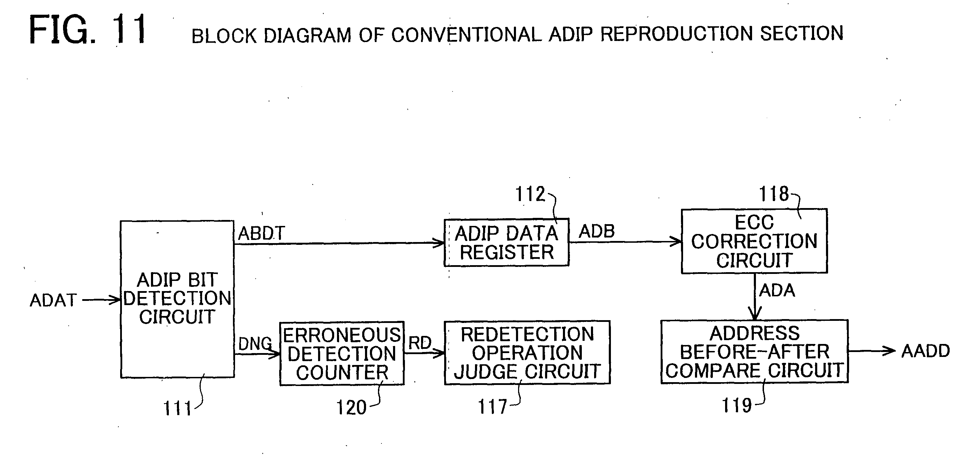

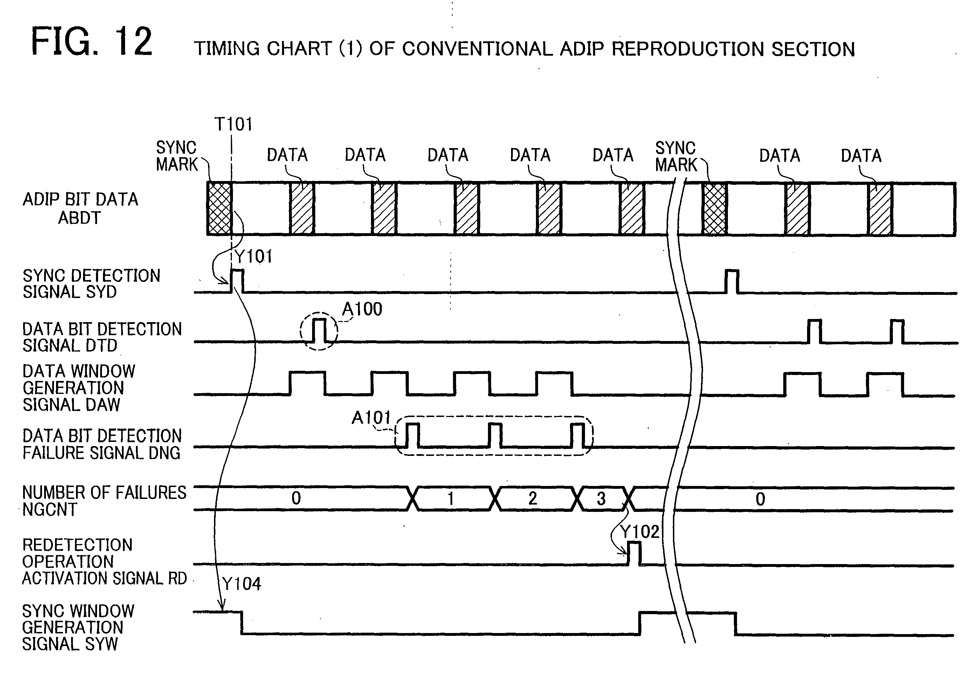

Starting a reproducing operation for an ADIP address will be described here. Fig. 11 shows the conventional circuit configuration that has implemented an ADIP address reproducing function and Fig. 12 shows a timing chart for the conventional operation. Fig. 11 is a block diagram showing the conventional ADIP reproduction circuit. The ADIP reproduction circuit comprises an ADIP bits detection circuit 111, an erroneous detection counter 120, a redetection operation judge circuit 117, an ADIP data register 112, an ECC correction circuit 118, and an address before-after compare circuit 119. ADIP data, ADAT, is input to the ADIP bits detection circuit 111, from which ADIP bits data, ABDT, and a data bits detection failure signal, DNG, are output. A pre-correction ADIP address, ADB, is output from the ADIP data register 112 to the ECC correction circuit 118. From the ECC correction circuit 118, a post-correction ADIP address, ADA, is output to the address before-after compare circuit 119. The pre and post correction addresses compare circuit 119 outputs an ADIP address, AADD, as one physical address.

Referring to Fig. 12, the operation of the conventional ADIP reproduction circuit will be described. When the ADIP data ADAT is input to the ADIP bits detection circuit 111, its decoding starts. When a sync mark (sync information) is detected at time T101, a sync detection signal SYD turns on (at Y101). At this time, a sync window generation signal SYW is at high level, i.e. a sync window is open (at Y104). The sync window generation signal SYW indicates whether the sync window is open or closed: A sync detection signal SYD is valid when it is generated with the sync window generation signal SYW at high level (window open) and invalid when generated with the SYW at low level (window closed). That is, the sync window generation signal SYW acts as an enable signal for the sync detection signal SYD. In this figure, therefore, the sync detection SYD is considered valid and accordingly an ADIP address reproducing operation starts.

During an ADIP reproducing operation, it is monitored whether each data bit (control information) of 52 bits of ADIP data in one word of the ADIP is detected, and when detected a data bit detection signal DTD turns on for each data bit (area A100). If data bit is not detected the data bit detection failure signal DNG is output to the erroneous detection counter 120 (area A101). The erroneous detection counter 120 indicates the number of the data bit detection failure signals DNG input to this counter during a reproducing operation. The number of failures NGCN is counted, and when the count reaches a predetermined value (3 in Fig. 12) the DIP reproducing operation is judged to be a failure. Then a high-leveled redetection operation activating signal RD is input to the redetection operation judge circuit 117 (at Y102). When the redetection operation activating signal RD is input to the redetection operation judge circuit 117, a sync mark redetection operation starts to perform a re-read operation for the ADIP address. Japanese unexamined patent publication Nos. 2003-85749 and 2002-343035 disclose examples of other information recording-reproducing apparatus having an ADIP reproduction circuit.

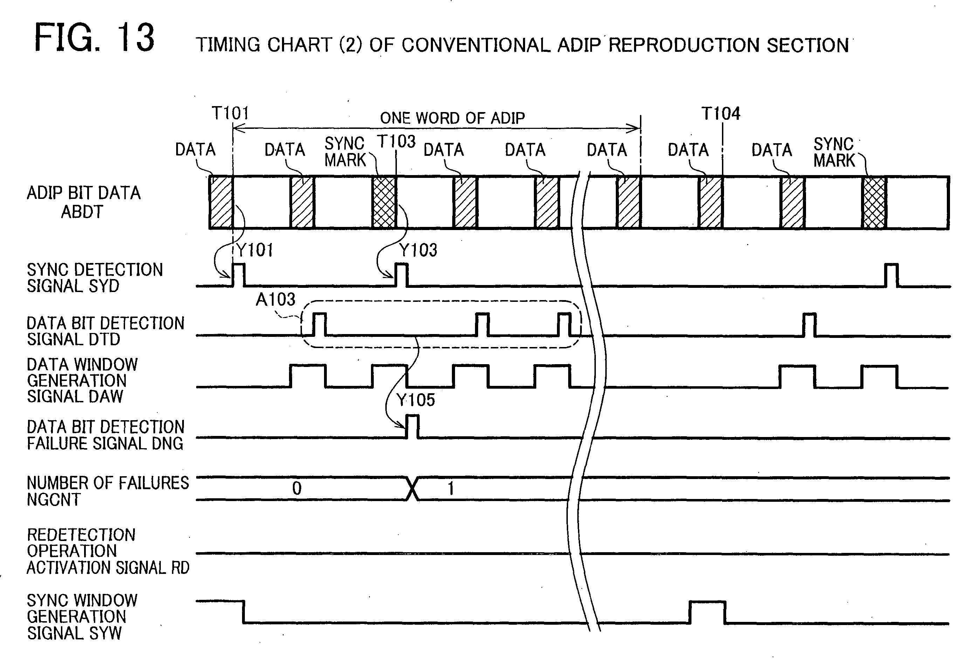

In the conventional circuit configurations, however, if the detection of the first sync mark is an erroneous detection, a problem occurs. The case in which a data bit is erroneously detected as the sync mark at the location where the data bit is recorded will be described with reference to Fig. 13. When a data bit is erroneously detected as the synchronization at time T101, the sync detection signal turns on (at Y101) and an ADIP address reproducing operation starts. In this case, each data bit is detected off its prescribed position. That is, the actual ADIP data ADAT and data demodulation timing mismatch, resulting in an out-of-sync state. However, since each data bit itself can be read the data bit detection signal DTD is detected (area A103) . Then the correct sync mark is detected at time T103 and the second sync detection signal SYD turns on (at Y103). At this time the sync window is closed with the sync window generation signal SYW at low level, and therefore the second sync detection signal SYD is considered invalid. Accordingly, the data bit detection failure signal DNG is only transmitted when the correct sync mark is read (at Y105) and the number of failures NGCNT will not reach the predetermined value (3), because of which the redetection operation activating signal RD will not be transmitted. In other words, since the number of failures is monitored without identifying the type of information expected to be detected, it is impossible to recognize the out-of-sync state from the erroneous counter 120. Furthermore, the data bit detection signal DTD is detected even after that, thus causing the ADIP address reproducing operation to continue in spite of the out-of-sync state.

In this case, erroneous detections continue until the ECC correction circuit recognizes the out-of-sync state indirectly. That is, when the pre-correction ADIP address ADB input to the ECC correction circuit 118 from the ADIP data register 112 cannot be corrected by the ECC correction circuit 118, it is judged that an erroneous pre-correction ADIP address ADB is input due to out-of-sync state and thereby redetection of the sync mark can be resumed. However, since the ECC correction circuit 118 continues to operate, even if the out-of-sync erroneous pre-correction ADIP address ADB is input, this circuit may formally correct it and output an erroneous address. In such a case, reproducing of the ADIP address further continues and the ECC correction circuit 118 repeats this error correction processing, and the out-of-sync state can be detected only when an uncorrectable ADIP address ADB is input. Because of this, the out-of-sync state cannot be detected until the ECC correction circuit 118 detects an uncorrectable error and thereby ADIP address readability (read speed, efficiency, etc.) will decrease, causing a problem.

It may also occur that erroneous detection continues until the address before-after compare circuit 119 recognizes the out-of-sync state. Specifically, the address before-after compare circuit 119 compares the post-correction ADIP address ADA input to it with the pre-correction ADIP address. If this circuit confirms that there is no prescribed continuity between the pre and post addresses and determines that the address reproduction was not performed normally, it can judge that the out-of-sync state has occurred, and thereby a sync mark redetection operation can be started. At the start of reading the ADIP address, however, address comparison to confirm the address continuity cannot be made until at least one word of the ADIP is reproduced and then corrected by the ECC correction circuit 118 to output the next address to be compared. That is, since multiple addresses are input to the address before-after compare circuit 119, the out-of-sync state is not detected until an error is detected, resulting in a decrease in the ADIP address readability.

This invention has been made to address the above problem of the prior art and an embodiment thereof can provide an information recording-reproducing apparatus and method wherein the out-of-sync state and the failure to read control information sequence are detected earlier so that a sync mark reread operation can be started earlier to quicken the recovery from the state in which control information sequence cannot be reproduced, and also the reading speed and efficiency of control information sequence can be increased for improving the readability.

According to a first concept of this invention, there is provided an information recording-reproducing apparatus for a recording medium, wherein the control information sequence consisting of sync information and a predetermined amount of control information is provided and the predetermined amount of control information continuously input is detected according to the synchronization timing based on the detection of sync information included in the control information sequence, and the information recording-reproducing apparatus comprises either or both of a control information erroneous detection detector that detects an erroneous detection of control information, or a sync information erroneous detection detector and a redetection operation judge circuit that performs redetection of sync information based on the results from at least either the control information erroneous detection detector or the sync information erroneous detection detector.

The control information sequence consists of sync information and a predetermined amount of control information. A predetermined amount of control information to be continuously input is detected according to the synchronization timing based on the detection of sync information. The control information erroneous detection detector detects an erroneous detection of control information and the sync information erroneous detection detector detects an erroneous detection of sync information. The redetection operation judge circuit performs the redetection of sync information based on the detection results from at least either the control information erroneous detection detector or the sync information erroneous detection detector. This enables quick redetection of the control information sequence.

According to a second concept of this invention, there is provided an information recording-reproducing apparatus wherein the control information sequence consisting of sync information and a predetermined amount of control information is provided and the predetermined amount of control information continuously input is detected according to the synchronization timing based on the detection of sync information included in the control information sequence, and the information recording-reproducing apparatus comprises sync information identifier that identifies the ith ("i" = 1 to N) item of information detected as ith detected sync information when sync information is detected N times (N is a positive integer) during the detection of control information included in one control information sequence, N registers in the ith of which a predetermined amount of continuously input information is stored according to the synchronization timing based on the ith detected sync information, and N error correction circuits that are provided corresponding to each information register and correct a predetermined amount of information held in the ith information register.

The sync information identifier identifies the ith ("i" =1 to N) item of sync information detected as the ith detected sync information. Since one control information sequence contains only one sync information, if sync information is detected N times only item of the detected information is correct sync information and the other (N - 1) items of information are erroneously detected ones. The ith information register stores a predetermined amount of continuously input information according to the synchronization timing based on the ith detected sync information, i.e. it stores the information each time sync information, which is detected N times, is detected. The ith error correction circuit is provided corresponding to the ith information register and corrects errors in a predetermined amount of information held in the ith information register.

Because of this, it is possible to switch to the information that has been detected and stored based on other correct sync information, instead of re-detecting the correct information from the beginning, when it is found that the information being detected and stored is based on erroneous sync information, by storing a predetermined amount of information each time sync information, which is detected N times, is detected and using a predetermined amount of information saved according to the synchronization timing based on the detection of correct sync information, which results in a decrease in the time required for redetection of the information. Since this enables both the fast recovery from erroneous detection of sync information and reliable information detection, faster recovery from the failure of detection of sync information and control information can be achieved and thereby the speed and efficiency of detection of sync information and control information can be increased for improved readability.

The above and further features and advantages of the invention will more fully appear from the following detailed description when the same is read in connection with the accompanying drawings. It is to be expressly understood, however, that the drawings are for the purpose of illustration only and are not intended as a definition of the limits of the invention.

In the drawings:
Fig. 1 is a diagram showing the physical format of a DVD+RW disk medium;
Fig. 2 is a diagram showing the track format of ADIP;
Fig. 3 is a diagram showing the physical configuration of ADIP;
Fig. 4 is a diagram showing the waveforms when ADIP bits are detected;
Fig. 5 is a diagram showing the bit configuration of one word of ADIP;
Fig. 6 is a block diagram of the information recording-reproducing system 40;
Fig. 7 is a block diagram of the ADIP reproduction section 10 according to the first embodiment;
Fig.8 is a timing chart of the ADIP reproduction section 10;
Fig. 9 is a block diagram of the ADIP reproduction section 10a according to the second embodiment;
Fig. 10 is a timing chart of the ADIP reproduction section 10a;
Fig. 11 is a block diagram of the conventional ADIP reproduction section;
Fig. 12 is a timing chart (1) of the conventional ADIP reproduction section; and
Fig. 13 is a timing chart (2) of the conventional ADIP reproduction section.

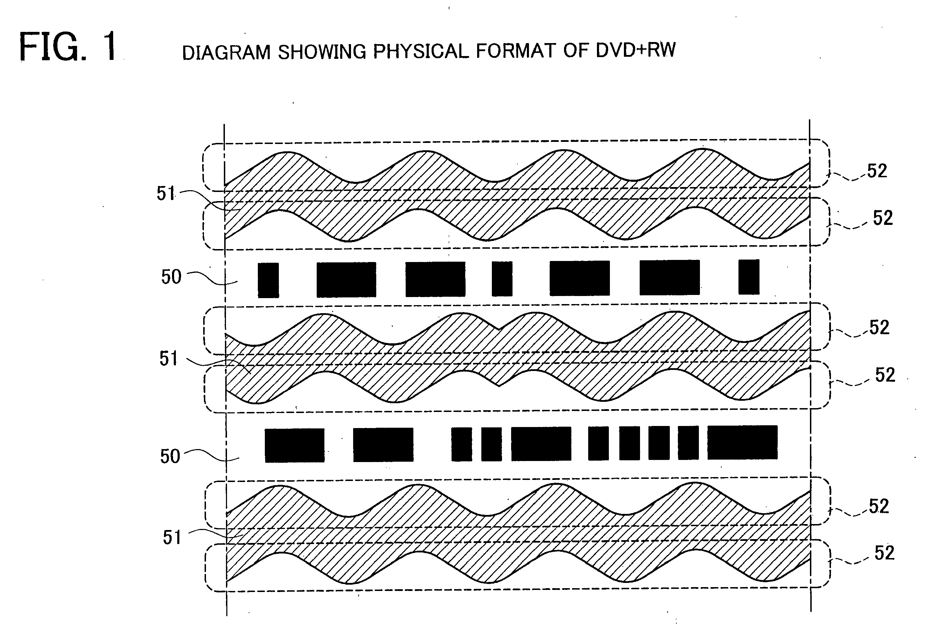

Preferred embodiments of the signal detection circuit according to this invention will be described in detail below with reference to Figs. 1 to 10 of the drawings. A first embodiment of this invention will be described with reference to Figs. 1 to 8. Fig. 1 shows schematically the physical format of a DVD+RW disk medium as an example of the media related to this invention. The DVD+RW comprises land tracks 51 for guiding a light source such as a laser beam and a groove track 50 for recording DVD data information, which is sandwiched between the land tracks and stores DVD data. Seen from the light source, the groove track is convex and the land track is concave and these convex and concave tracks are formed along the circumference of an optical disk. The area at the boundary between land track 51 and groove track 50 is called a wobble 52, in which Address In Pregroove (ADIP) is prerecorded.

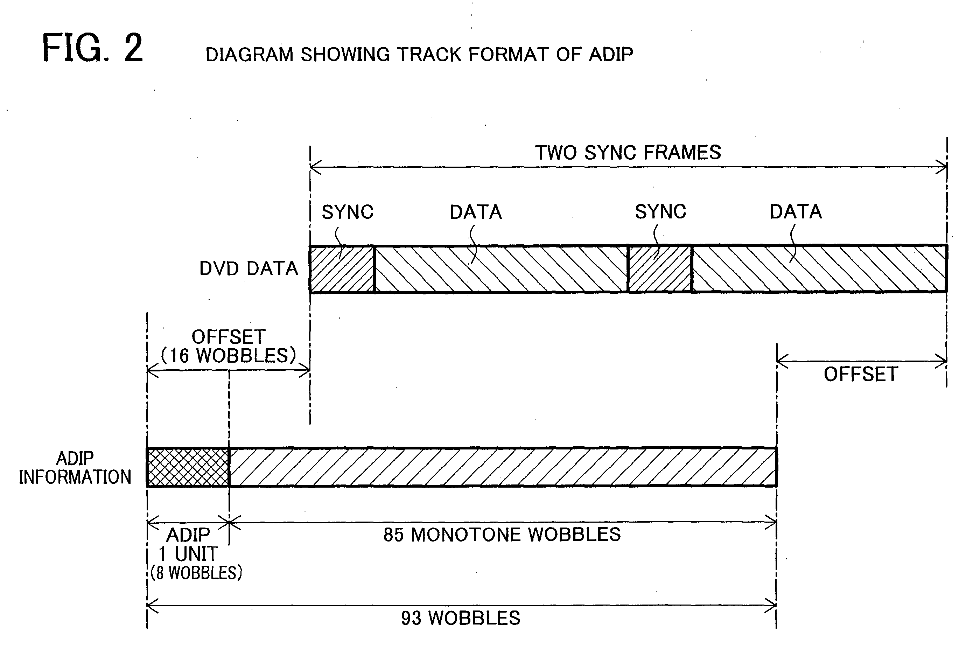

Fig. 2 shows the track format of the ADIP and Fig. 2 shows how ADIP information is disposed relative to the DVD data. One unit of the ADIP is recorded per two sync frames of DVD data. In the wobble area, 93 wobbles are recorded per two sync frames of DVD data. One unit of ADIP is recorded over the length of eight wobbles starting at 16 wobbles backward offset from the DVD data as shown and one unit of ADIP is decoded to one bit of ADIP data or a sync mark.

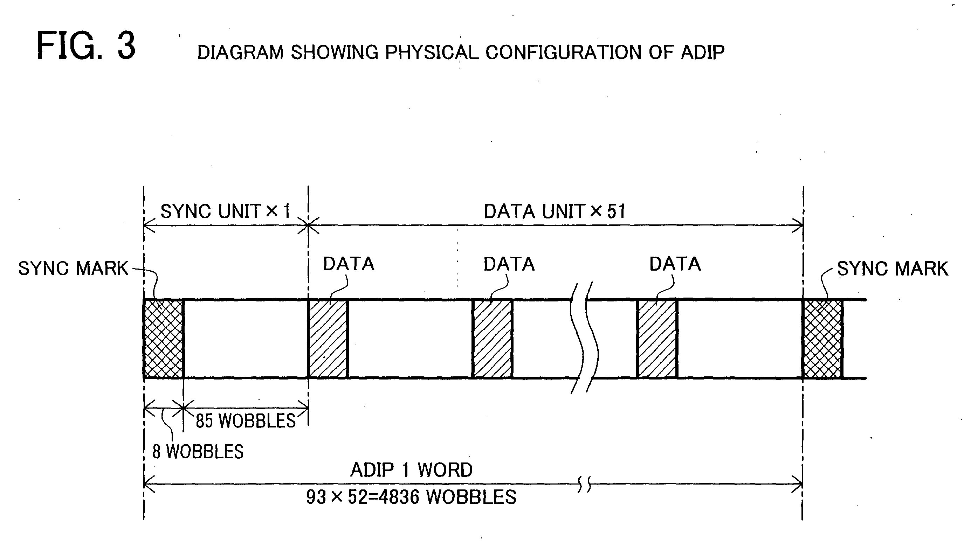

Fig. 3 shows the physical configuration of an ADIP word. One word of ADIP (with error correction code) consists of 52 bits of ADIP data, one bit of ADIP sync mark (sync unit) at the head and the subsequent 51 bits of ADIP data (data unit). Reproduction of one word of ADIP word starts when an ADIP sync mark is detected. Once decoding of the data starts, an ADIP sync mark will not be detected in the 51 bits of ADIP data. Since 93 wobbles (including eight wobbles for one bit of ADIP data) are recorded per two sync frames of DVD data, one word of ADIP consists of:

93 wobbles x 52 = 4836 wobbles.

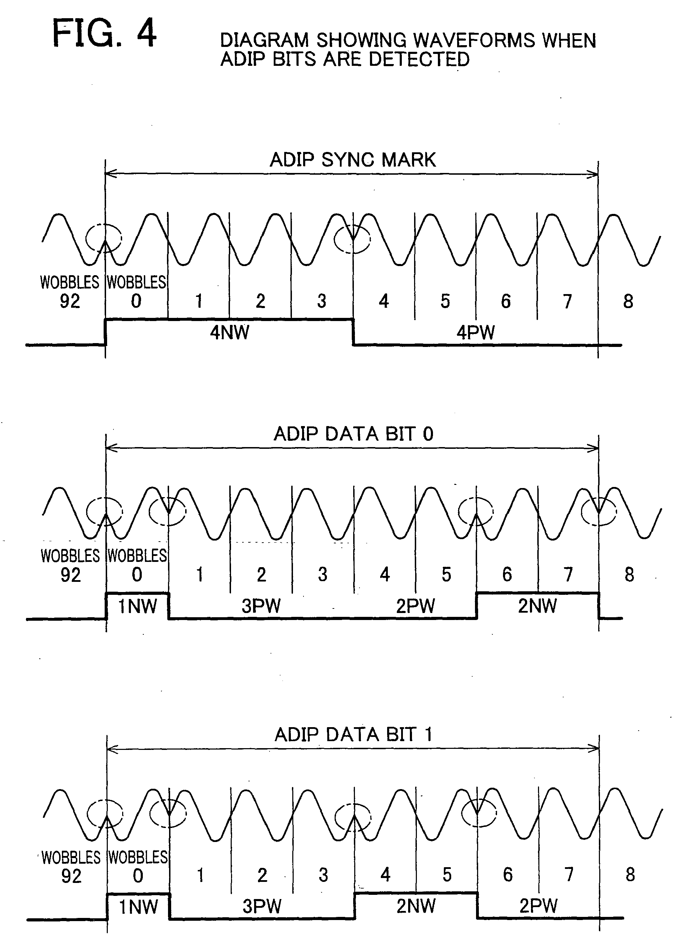

Fig. 4 shows how the data is decoded. As shown here, one bit of ADIP is decoded to an ADIP sync mark (ADIP sync) when eight wobbles of one unit of ADIP are "11110000". When eight wobbles of one unit of ADIP are "10000011" it is decoded to ADIP data bit "0" and when "10001100" it is decoded to ADIP data bit "1" .

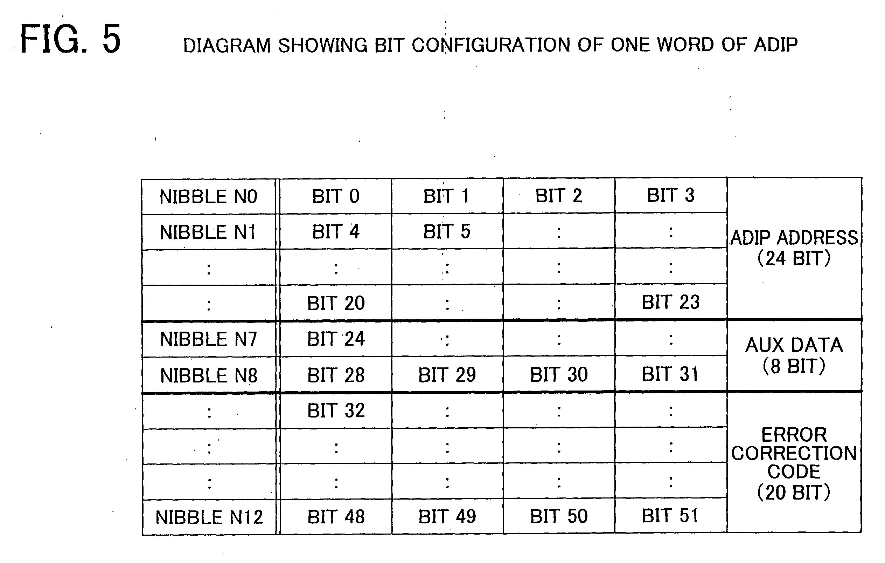

Fig. 5 shows the error correction of an ADIP word. As shown here, ADIP words are rearranged in units of nibble, i.e. four ADIP data bits (error correction codes processing by interleaving). One word of ADIP is represented by 52 bits of ADIP data (= 13 nibbles) and is formed by "ADIP address (24 bits)" + "AUX data (8 bits)" + "error correction code (20 bits)". ADIP words are processed in units of nibble. For error detection and correction, up to two nibbles of the 13 nibbles, i.e. one to eight bits, can be corrected. One word of ADIP can be processed as one physical address only after it is reproduced.

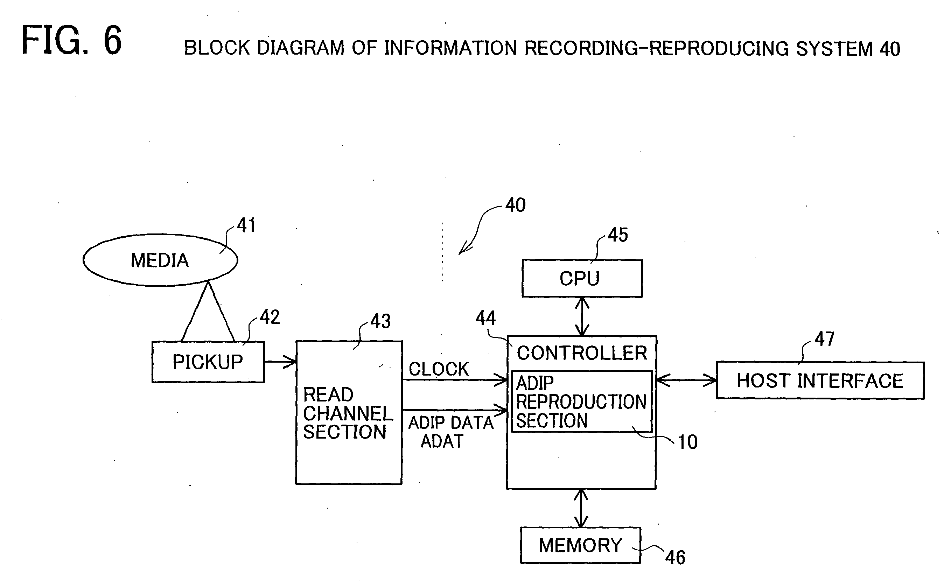

Fig. 6 is the system configuration of the information recording-reproducing system 40 provided with an ADIP reproduction section 10. The information recording-reproducing apparatus 40 has a medium 41, a pickup 42, a read channel 43, a controller 44 as the means for receiving information, a CPU (Central Processing Unit) 45, memory 46, and a host interface 47.

As the medium 41, for instance, a DVD+R capable of additional writing of information or a DVD+RW capable of rewriting information can be preferably used. On these media, the ADIP information as physical address information is recorded, as well as audio and/or visual data. The pickup 42 can read data from medium 41 to perform signal processing and output the processed data to the read channel 43. The read channel 43 transfers a clock and ADIP data ADAT to the controller 44. The CPU 45 controls the controller 44 using the memory 46 to transfer data to the host interface 47. Here, prior to reproducing various data it is necessary to reproduce the ADIP address to know the address for data detection. The ADIP reproduction section 10 is an integral part of the controller 44 and controls the reproduction of the ADIP data ADAT output from the read channel 43. Reproducing one word of ADIP in the ADIP reproduction section brings one physical address, which is used as guide to perform a write or read operation.

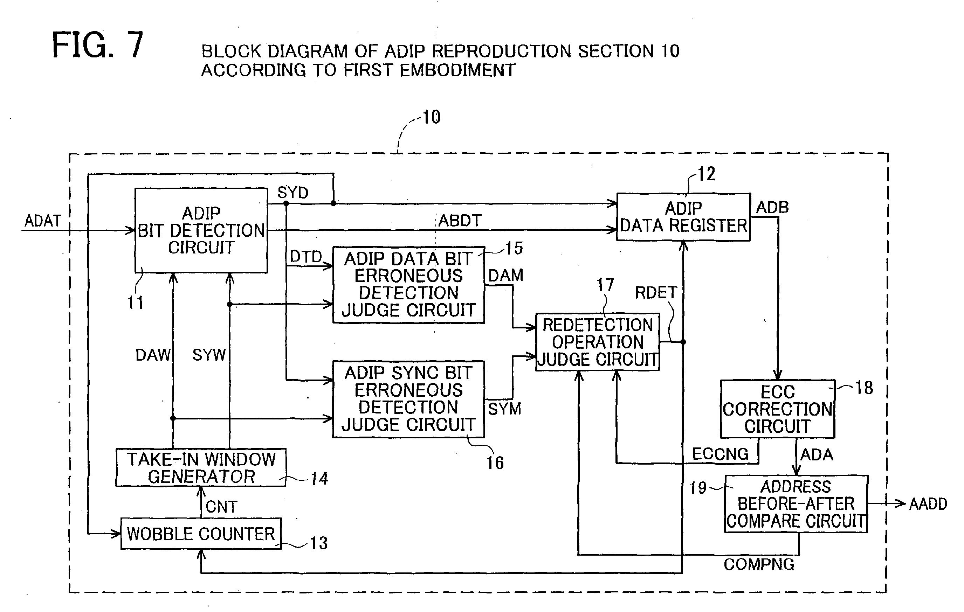

Fig.7 shows the configuration of the ADIP reproduction section 10 according to the first embodiment. The ADIP data ADAT is input to the ADIP reproduction section, from which an ADIP address AADD is output as the physical address. The ADIP reproduction section 10 comprises an ADIP bit detection circuit 11, an ADIP data register 12, a wobble counter 13, a take-in window generator 14, an ADIP data bit erroneous detection Judge circuit 15, an ADIP sync bit erroneous detection judge circuit 16, a redetection operation judge circuit 17, an ECC correction circuit 18, and a address before-after compare circuit 19.

The ADIP data ADAT, a data window generation signal DAW, and a sync window generation signal SYW are input to the ADIP bit detection circuit 11. From the ADIP bit detection circuit 11, a sync detection signal SYD, an ADIP bit data ABDT, a data bit detection signal DTD, and the sync detection signal SYD are output. The data bit detection signal DTD and the sync window generation signal SYW are input to the ADIP data bit erroneous detection judge circuit 15, from which a data bit erroneous detection flag signal DAM is output. The sync detection signal SYD and the data window generation signal DAW are input to the ADIP sync bit erroneous detection judge circuit 16, from which the sync erroneous detection flag signal SYM is output. The data bit erroneous detection flag signal DAM and the sync erroneous detection flag signal SYM are input to the redetection operation judge circuit 17, from which a redetection operation execution flag signal RDET is output.

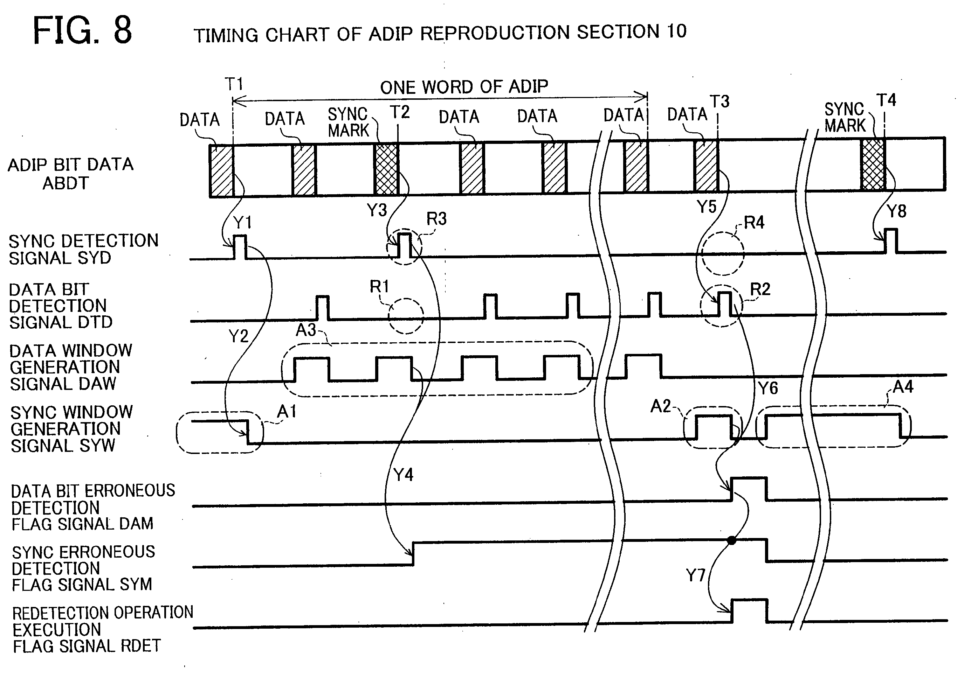

Referring to the timing chart in Fig. 8, the case where a sync mark that triggers a read operation was erroneously detected (such as, when a data bit was detected as a sync mark due to defective media or the like) will be described below. When an read operation starts, the ADIP data ADAT is input to the ADIP bit detection circuit 11. In the ADIP bit detection circuit 11, the input ADIP data ADAT is always decoded to the ADIP bit data ABDT to produce a data bit or sync mark at predetermined intervals, and at the same time an operation of searching for a sync mark everywhere is performed. At this time, the sync window generation signal SYW kept at high level is input to the ADIP bit detection circuit 11 from the take-in window generation circuit 14 to keep the sync window open (area A1). When a data bit is detected as a sync mark (sync) at time T1, the sync detection signal SYD is transmitted from the ADIP bit detection circuit 11 (at Y1) and the sync window generation signal SYW is at high level (window open). Here, the sync window generation signal indicates whether the sync window is open or closed: The sync detection signal SYD generated when the sync window generation signal SYW is at high level (window open) is valid and the one generated when at low level (window closed) is invalid. That is, the sync detection signal SYD acts as an enable signal for the sync window generation signal. Therefore, the sync detection signal SYD is considered valid and the detection of this valid sync mark triggers an ADIP reproducing operation. After the sync detection signal SYD is transmitted, the sync window generation signal falls (at Y2) and will' not rise until after one word of ADIP when the next sync mark is expected to be detected (area A2).

The sync detection signal SYD output from the ADIP bit detection circuit 11 is input to the ADIP data register 12, the wobble counter 13, and the ADIP sync bit erroneous detection judge circuit 16. When the sync detection signal SYD is input to the ADIP data register 12, the ADIP data register 12 is reset to prepare for holding 52 bits (one word of ADIP) of data bits to be input at predetermined intervals.

The wobble counter 13 is a scale-of-93 counter that counts up each wobble. When the sync detection signal SYD is input, the wobble counter 13 is reset to start a count-up, thus allowing the position of a next data bit to be predicted from a count value CNT of the wobble counter 13. After that, valid data bits can be taken in without fail by outputting the high-level data window generation signal DAW from the take-in window generator 14 to the ADIP bit detection circuit 11 (area A3) at the timing when the existence of data bits is predicted. Also, since the position of a next sync mark can be predicted, it is possible to take in a valid sync mark without fail by outputting the sync window generation signal SYW to the ADIP bit detection circuit 11 (area A2) for every one word of ADIP.

When a correct sync mark is detected at time T2, the second time sync detection signal SYD during the reading of one word of ADIP is transmitted from the ADIP bit detection circuit 11 (at Y3) and input to the ADIP sync bit erroneous detection judge circuit 16. At this time, the data window generation signal DAW input from the take-in window generator 14 to the ADIP sync bit erroneous detection judge circuit 16 is at high level (data window open) and therefore the detection of a data bit is expected. This causes the difference between the data expected to be detected and the actually detected data, i.e. a sync mark was detected at the timing when the detection of a data bit is expected, resulting in the sync erroneous detection flag signal SYM informing data bit detection failure being output from the ADIP sync bit erroneous detection judge circuit 16 (at Y4) . Since data bit detection and sync mark detection are complementary, the timing when data bit detection is expected is synonymous with the timing when sync mark detection is not expected.

At the head of next one word of ADIP (the time T3 in Fig. 8), it is checked whether a difference occurs between the detection-expected data (a sync mark) and the actually detected data. Since the next sync mark is expected to be read at time T3, a high level sync window generation signal SYW is transmitted from the take-in window generator 14 to open the sync window (area A2). At this time, a data bit really exists at time T3 and it is unlikely that a data bit is erroneously detected as a sync mark again, and so a data bit is detected at time T3. When a data bit is detected, the data bit detection signal DTD is transmitted from the ADIP bit detection circuit 11 (at Y5) and input to the ADIP data bit erroneous detection Judge circuit 15. At this time, the sync window generation signal SYW input from the take-in window generator 14 to the ADIP data bit erroneous detection judge circuit 15 is at high level (sync window open) and the detection of a sync mark is expected. Because of this, at the head of next one word of ADIP, a difference between the data expected to be detected and the actually detected data, i.e. a data bit was detected at the timing when a sync mark is expected to be detected, the data bit erroneous detection flag signal DAM indicating a sync mark detection failure is output from the ADIP data bit erroneous detection Judge circuit 15 (at Y6).

Since both the high level data bit erroneous detection flag signal DAM and the high level sync erroneous detection flag signal SYM are input to the redetection operation judge circuit 17, the out-of-sync of ADIP reproduction is recognized due to erroneous detection of a sync mark and it is judged that the ADIP address failed to be read. This causes the redetection operation judge circuit 17 to output the redetection operation execution flag signal RDET (at Y7) to start a sync mark redetection operation.

The redetection execution flag signal RDET is input to the ADIP data register 12, the wobble counter 13, and others including the CPU (not shown). When the redetection operation execution flag signal RDET is input to the CPU, etc., the CPU controls the read driver system and the synchronization detection operation is performed again. When the redetection operation execution flag signal RDET is input to the ADIP data register 12, the ADIP data register 12 is reset to wait for the sync detection signal SYD. When the redetection operation execution flag signal RDET is input to the wobble counter 13, the wobble counter 13 is reset to wait for the sync detection signal SYD and also informs the take-in window generator 14 of this fact. Then, the take-in window generator 14 outputs the sync window generation signal SYW that is always at high level, being ready for taking in the sync detection signal SYD (area A4) .

When the redetection of a sync mark is performed at time T4, the sync detection signal SYD is transmitted from the ADIP bit detection circuit 11 (at Y8). Since the sync window generation signal SYW is at high level (window open), the sync detection signal SYD is considered valid and the ADIP reproduction operation starts. This completes the sync mark redetection operation.

That is, whether or not a data bit or sync mark failed to be detected is monitored by comparing the information expected to be detected and that actually detected during the reading of one word of ADIP. When reading of the ADIP starts on detection of a sync mark, if a data bit detection failure is detected in one word of ADIP and if a sync mark detection failure is detected while reading the next ADIP address, it is possible to judge that the data bit detection fails due to the sync information detection failure and thus rereading of sync information can be started.

On the other hand, if a data bit detection failure is detected while reading one word of ADIP but no sync information detection failure is detected during the reading of the next ADIP address, it can be judged that it is not a sync information detection failure. Referring to Fig. 8, for example, the case where the detection of the first sync mark (at time T1) was normally performed but a data bit was erroneously detected as a sync mark during the ADIP reproduction (at time T2) will be discussed below. In this case, since information expected to be detected is different from that actually detected, i.e. a sync mark was detected when a data bit is expected to be detected, at time T2 when one word of ADIP is reproduced, the sync erroneous detection flag signal SYM indicating a data bit detection failure is output from the ADIP sync bit erroneous detection judge circuit 16. However, because a sync mark was detected successfully at time T1, a sync mark is detected when it is expected to be detected, no difference occurs between the data expected to be detected and that actually detected at the head of the next one word of ADIP (time t3). Therefore, the data bit erroneous detection flag signal DAM is not output from the ADIP data bit erroneous detection judge circuit 15, from which it is judged that no out-of-sync occurs. This allows the ADIP read operation to continue.

Also, if a data bit detection failure is not detected while one word of ADIP is being read and a sync information detection failure is detected during the reading of the next ADIP address, it is judged that that case is not a sync information detection failure. An example of this is the case where the first sync mark (at time T1) is detected and also a data bit is detected when a data bit is expected to be detected during the reproduction of ADIP (at time T2), but a data bit is erroneously detected when a sync mark is expected to be detected at the head of the next one word of ADIP (at time T3),in Fig. 8. Also in this case, it is possible to judge that no out-of-sync occurs and therefore the ADIP read operation can be continued.

Further, an ADIP address read failure can be recognized and a sync mark redetection operation can be started by means of the ECC correction circuit 18 and the address before-after compare circuit 19. The ADIP data register 12 holds 52 bits (for one word of ADIP) of the ADIP bit data ABDT input from the ADIP bit detection circuit 11, forms a bit sequence with error correction code, and then outputs it as a pre-correction ADIP address ADB to the ECC correction circuit 18. The ECC correction circuit 18 corrects the pre-correction ADIP address ADB input from the ADIP data register 12. If the correction is successful, a post-correction ADIP address ADA (leading 24 bits of 52 bits) can be obtained. If the correction fails, the pre-correction ADIP address ADB is wrong and the ADIP address reread operation starts, causing the ECC correction circuit 18 to output an ECC correction failure signal ECCNG to the redetection operation judge circuit 17. When the ECC correction failure signal ECCNG is input, the redetection operation judge circuit 17 outputs the high level redetection operation execution flag signal RDET and the sync mark redetection operation mentioned above is performed.

The address before-after compare circuit 19 compares the post-correction ADIP address ADA to be input with the previously input post-correction ADIP address ADA. If there is a predetermined continuity between these addresses, it is checked whether the address reproduction has been normally made by confirming the continuity. If it is judged that the address reproduction has been normally made, the ADIP address AADD is output as one physical address. If it is judged that the address reproduction has not been made normally, then the address reproduction failure signal COMPNG is output from the address before-after compare circuit 19 to the redetection judge circuit 17 in order to start an ADIP address reread operation. When the address reproduction failure signal COMPNG is input, the redetection operation judge circuit 17 outputs the high level redetection operation execution flag signal RDET and the sync mark redetection operation is performed.

This allows the quick and reliable detection of sync information erroneous detection and also the faster recovery from the state in which control information sequence cannot be reproduced, making it possible to increase the speed and efficiency of reading control information sequence for improved readability.

In this embodiment, if the ADIP sync bit erroneous detection judge circuit 16 detect that a sync mark was detected at the timing when a data bit is expected and the ADIP data bit erroneous detection judge circuit 15 detects that a data bit was detected at the timing when a sync mark is expected, an out-of-sync condition is recognized and a redetection operation starts, i.e. detection of both sync mark and data bit is monitored. However, the method of recognizing the out-of-sync condition is not limited to this and it is also possible to recognize the out-of-sync condition by monitoring the detection of either sync mark or data bit.

In Fig. 7, for example, assuming that data bits alone are monitored, a configuration having only the ADIP data bit detection judge circuit 15 is possible. Also possible is a configuration noting the data bit detection signal DTD where the redetection operation execution flag signal RDET is output when the detection of the data bit detection signal DTD was not detected at expected timing (area R1) and the detection of the data bit detection signal DTD was detected at unexpected timing (area R2) during the reproduction of the next control information sequence, which has the same effect. At this time, no detection of the data bit detection signal DTD which was detected at expected timing can be recognized from no detection of the data bit detection signal DTD when the sync window generation signal SYW is at low level. Likewise, detection of the data bit detection signal DTD which was detected at unexpected timing can be recognized from detection of the data bit detection signal DTD when the sync window generation signal SYW is at high level. This is because there is a complementary relationship between the sync detection signal SYD and the data bit detection signal DTD and also between the sync window generation signal SYW and the data window generation signal DAW.

Likewise, in Fig. 7, assuming that sync mark alone is monitored, a configuration having only the ADIP sync bit erroneous detection judge circuit 16 is possible. Also possible is a configuration noting the sync detection signal SYD where the redetection operation execution flag RDET is output when the detection of the sync detection signal SYD is detected at unexpected timing (area R3) and the detection of the sync detection signal SYD is not detected at expected timing (area R4) during the reproduction of next control information sequence, which has the same effect. At this time, detection of the sync detection signal SYD which was detected at unexpected timing can be recognized from detection of the sync detection signal SYD when the data window generation signal DAW is at high level. Likewise, no detection of the sync detection signal SYD can be recognized from no detection of the sync detection signal SYD when the data window generation signal DAW is at low level.

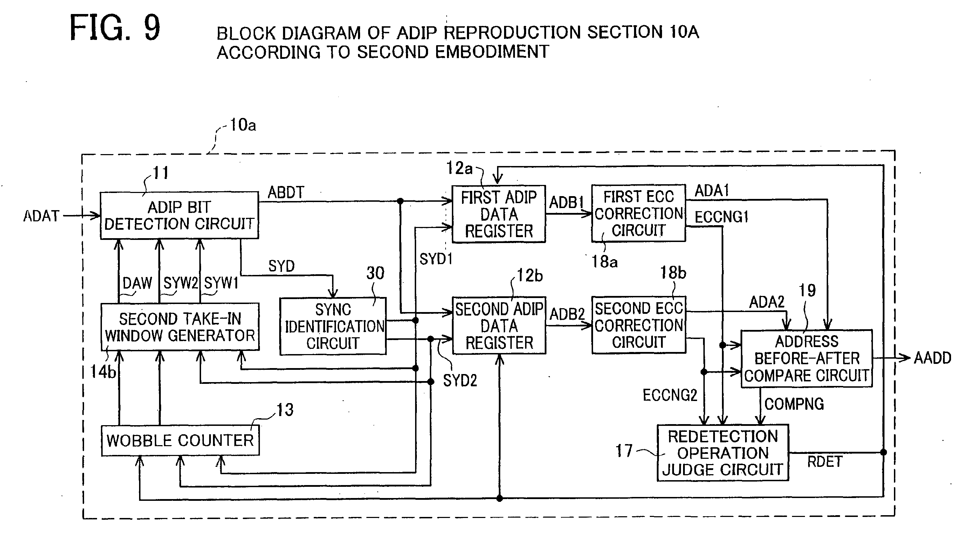

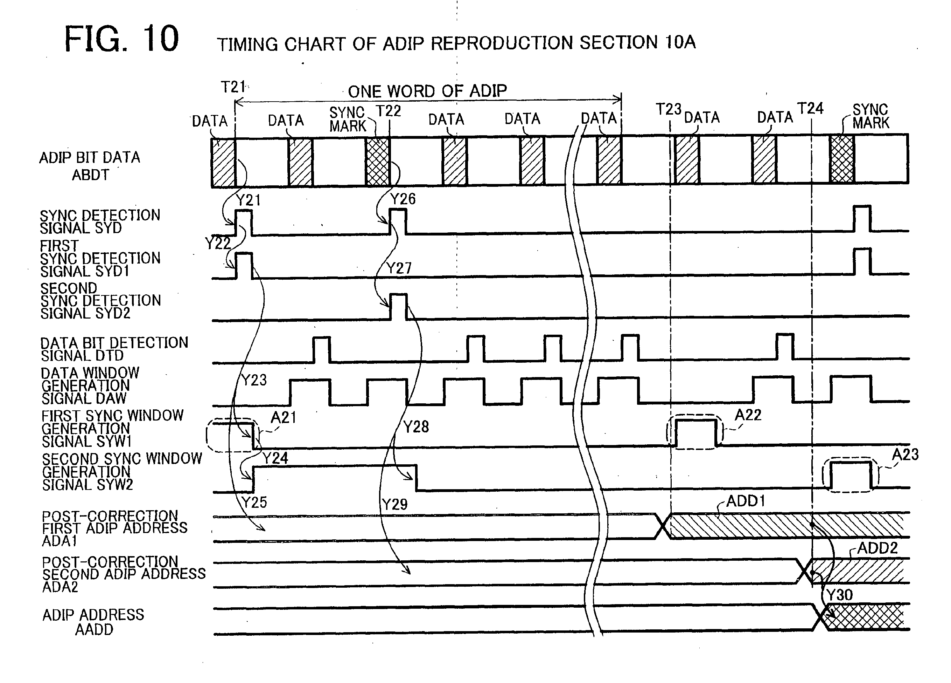

Referring to Figs. 9 and 10, a second embodiment of this invention will be described below. Fig. 9 shows an ADIP reproduction section 10a. Compared with the ADIP reproduction section 10 in the first embodiment, the ADIP reproduction section 10a comprises a sync identification circuit 30, a first ADIP data register 12a, a second ADIP data register 12b, a first ECC correction circuit 18a, a second ECC correction circuit 18b, and a second take-in window generator 14b. Since the other configuration is the same as the first embodiment (Fig. 7) its description is omitted here.

The sync detection signal SYD is input to the sync identification circuit 30 from the ADIP bit detection circuit 11. The sync identification circuit 30 outputs a first sync detection signal SYD1, which is input to a first ADIP data register 12a, the wobble counter 13, and a second take-in window generator 14b. Also a second sync detection signal SYD2 is output from the sync identification circuit 30 and input to a second ADIP data register 12b, the wobble counter 13, and a second take-in window generator 14b. From the second window generator 14b, a first sync window generation signal SYW1 and a second sync window generation signal SYW2 are output.

The case where, at the start of reading the ADIP address, a sync mark that triggers the start of reading was erroneously detected (such as the case where a data bit was erroneously detected as a sync mark due to defective media or the like) will be described with reference to the timing chart in Fig. 10. When the reading operation starts, the ADIP data ADAT is input to the ADIP bit detection circuit 11. In the ADIP bit detection circuit 11, the input ADIP data ADAT is always decoded to the ADIP bit data ABDT to produce a data bit or sync mark at predetermined intervals and at the same time a sync mark is searched for everywhere. At this time, the high level first sync window generation signal SYW1 is input from the second take-in window generator 14b to the ADIP bit detection circuit 11, keeping the first sync window open (area A21). If a data bit is erroneously detected as a sync mark at time T21, the sync detection signal SYD is transmitted from the ADIP bit detection circuit 11 (at Y21) to start the reproduction operation. Since one word of ADIP contains only one sync mark, if a sync mark is detected multiple times, only one of them is actually a correct sync mark and the others are wrong ones.

When the first sync detection signal SYD is input to the sync identification circuit 30, the first sync detection signal SYD1 is output (at Y22) and input to the first ADIP data register 12a, the wobble counter 13, and the second take-in window generator 14b.

In the second take-in window generator 14b, when the first sync detection signal SYD1 is input, the first sync window generation signal SYW1 falls (at Y23) and instead the second sync window generation signal SYW2 is at high level (at Y24). Since detection of the first sync detection signal SYD1 allows the prediction of the position of the next sync mark by the wobble counter 13, the next sync mark can be taken in without fail by outputting the first sync window generation signal SYW1 to the ADIP detection circuit 11 from the second window generator 14b for every one word of ADIP (area A22). In the first ADIP data register 12a, the first sync detection signal SYD1 is triggered to start to hold one word of ADIP (at Y25).

When the ADIP detection circuit detects a correct sync mark at time T22, as the second sync window generation signal SYW2 is at high level and the second sync window is open (data enable) the second sync detection signal SYD in one word of ADIP is transmitted from the ADIP bit detection circuit 11 and input to the sync identification circuit 30 (at Y26). When the second sync detection signal SYD in one word of ADIP is input to the sync identification circuit 30,the second sync detection signal SYD2 is output from the sync identification circuit 30 (at Y27) and input to the first ADIP data register 12a, the wobble counter 13, and the second take-in window generator 14b.

In the second take-in window generator 14b, when the second sync detection signal SYD2 is input,the second sync window generation signal SYW2 falls and the second sync window is closed (at Y28). Since the position of the next sync mark can be predicted from the wobble counter 13, the high level second sync window generation signal SYW2 is output from the second take-in window generator 14b after one word of ADIP (area A23).

In the second ADIP data register 12b, the second sync detection signal SYD2 is triggered to hold data for one word of ADIP (at Y29). That is, in parallel with the ADIP address reproduction triggered by the first sync detection signal SYD, the ADIP address reproduction triggered by the second and subsequent sync detection signals SYD is performed.

At time T23, the first ADIP data register 12a holds 52 bits (for one word of ADIP) of the ADIP bit data ABDT input from the ADIP bit detection circuit 11, forms a bit sequence with error correction code, and then outputs it as the pre-correction first ADIP address ADB1 to the first ECC correction circuit 18a. Likewise, at time T24, the second ADIP data register 12b forms a bit sequence with error correction code for one word of ADIP from the ADIP bit data ABDT that is input from the ADIP bit detection circuit 11 and then outputs it as the pre-correction second ADIP address ADB2 to the second ECC correction circuit 18b. In the first ECC correction circuit 18b, since correction of the pre-correction first ADIP address ADB1 was attempted, the first address ADD1 is obtained as the post-correction first ADIP address ADA1 regardless of whether the error correction succeeded or not. Likewise, in the second ECC correction circuit 18b, since correction of the pre-correction second ADIP address ADB2 was attempted, the second address ADD2 is obtained as the post-correction second ADIP address ADA2 regardless whether the error correction succeeded or not. Both the first address ADD1 and the second address ADD2 are output to the address before-after compare circuit 19.

In the address before-after compare circuit 19, either first address ADD1 or second address ADD2 is selected as the reference ADIP address AADD and output. At this time, if one of the first address ADD1 and second address ADD2 is a correctable address and the other is an uncorrectable address, the correctable address is judged to be a right address for selection and is output from the address before-after compare circuit 19 as the ADIP address AADD (at Y30). Whether an address is correctable or not is judged from the first ECC correction failure signal ECCNG1 and the second ECC correction failure signal ECCNG2 indicating that the address is uncorrectable.

On the other hand, if both the first address ADD1 and second address ADD2 are correctable addresses, one of them is selected and output as the ADIP address AADD (at Y30). As a method of selection, for example, giving priority to the first address ADD1 that is first input can be considered. Another method to be considered is comparing both addresses to select one that was reproduced with a correct sync mark.

Because of this, the ADIP reproduction section 10a has one more set of ADIP data processing circuits than the prior art and can reproduce two ADIP addresses in parallel and select one that is reproduced with a correct sync mark by starting address data production with the second sync mark detected while reproducing one word of ADIP and storing it in the second ADIP data register 12b. Thus, instead of reading the correct ADIP address again from its beginning when an ADIP address being read is found to be an ADIP address based on a wrong sync mark, it is possible to switch to the address that has been read based on a correct sync information and thereby to reduce the time required for rereading the address. This allows quick recovery from erroneous detection of a sync mark and also reliable reading of an ADIP address, which speeds up the recovery from the state in which the ADIP address cannot be reproduced and increases the speed and efficiency of reading the ADIP address for improved readability.

It is also possible to recognize an ADIP address read failure and start a sync mark redetection operation by means of the first ECC correction circuit 18a, the second ECC correction circuit 18b, and the address before-after compare circuit 19. If neither the first ECC correction circuit 18a nor the second ECC correction circuit 18b can correct the error, the first ECC correction failure signal ECCNG1 and second ECC correction failure signal ECCNG2 indicating that the error is uncorrectable are input to the redetection operation judge circuit 17. In this case, the redetection operation judge circuit 17 outputs the redetection operation execution flag signal RDET to start a sync mark redetection operation.

On the other hand, if both the first ECC correction circuit 18a and the second ECC correction circuit 18b can correct the error, the ADIP address read failure cannot be recognized. However, in the address before-after compare circuit 19, if the post-correction first ADIP address ADA1 and the post-correction second ADIP address ADA2 are compared with the previously read addresses which should have continuity, the continuity of neither address may not be confirmed. In this case, the address before-after compare circuit 19 informs the redetection operation judge circuit 17 that the address reproduction failed with the address reproduction failure signal COMPNG. Then, the redetection operation judge circuit 17 outputs the redetection operation execution flag signal RDET to start a sync mark redetection operation. Relating the above description to the claims, data bit is an example of control information, sync mark is an example of sync information, ADIP address is an example of control information sequence, ADIP data bit erroneous detection judge circuit 15 is an example of control information erroneous detection detector, ADIP sync bit erroneous detection circuit 16 is an example of sync information erroneous detection detector, redetection operation judge circuit 17 is an example of redetection operation judge section, sync identification circuit 30 is an example of sync information identification section, first ADIP data register 12a and second ADIP data register 12b are examples of ith information register, and first ECC correction circuit 18a and second ECC correction circuit 18b are examples of ith error correction circuit.

This invention is not limited to the embodiments described above and it goes without saying that various other improvements and modifications can be made without departing from the scope of this invention. In the second embodiment, the ADIP reproduction section 10a comprises two data registers, the first ADIP data register 12a and the second ADIP data register 12b, but other configurations are possible. If the number of data registers is increased, the allowed number of erroneous detections during the reading of one word of ADIP increases and thereby the readability, i.e. the speed and efficiency of reading of the ADIP address, increases even in an environment with more noise.

The function described in the first and second embodiments may be configured so that the function is stopped if successful reproduction of the ADIP address is confirmed. In the first embodiment (Fig. 7), for example, if a data bit detection failure is not detected in one word of ADIP when the reading of the ADIP is started by the detection of a sync mark and also a sync information detection failure is not detected during the reading of the next ADIP address, it shows that the correct sync mark was detected and the ADIP was successfully reproduced. Since it is expected that sync marks can be detected stably at predetermined intervals after that, stopping the detection operation by the ADIP data bit erroneous detection judge circuit 15 and the ADIP sync bit erroneous detection judge circuit 16 can prevent malfunctions of these circuit and/or save the power consumption of the ADIP reproduction section 10. Likewise, in the second embodiment (Fig. 9), if it is found that a correct sync mark was detected and the ADIP was successfully reproduced, stopping the detection operation by the sync identification circuit 30 and the second ADIP data register 12b can prevent malfunctions of these circuits and/or save the power consumption of the ADIP reproduction section 10a.

Further, it is possible to provide an ADIP reproduction section comprising the combined functions of the first and second embodiments. Such an ADIP reproduction section can comprise the characteristic circuits in both embodiments including the ADIP data bit erroneous detection judge circuit 15, ADIP sync bit erroneous detection judge circuit 16, sync identification circuit 30, second ADIP data register 12b, second ECC correction circuit 18b, and address before-after compare circuit 19 and it is possible to select the redetection operation described in the first and second embodiment by means of a switch section not shown. This allows more appropriate redetection operations according to situations.

Although the ADIP reproduction sections 10 and 10a can be implemented by the configurations shown in the first and second embodiments, they can be configured by hardware consisting of various electronic circuits and also it is possible to process the reproduction procedure as a series of data processing procedures by software. For the processing by software, the processing program, the results of arithmetic operations, and the like can be stored in memory 46 in Fig. 6, retrieved as needed, and executed or processed by an arithmetic processor, such as a DSP, and/or CPU 45 contained in the controller 45.

In the first and second embodiments, when the reading of the ADIP is triggered by the detection of a sync mark, if a data bit detection failure is detected in one word of ADIP and also a sync information detection failure is detected while the next ADIP address is being read, it is possible to judge that the data bit detection failed based on the sync information detection failure and to start a sync information rereading operation. However, any other embodiment is also possible. If a data bit detection failure is detected in one word of ADIP, for example, it is possible to monitor whether or not the detection of sync information succeeds during the subsequent reading of predetermined number of ADIP addresses, and judge that the detection of sync information failed if a sync information detection failure is detected during the reading of some ADIP address. This allows more reliable detection of sync information detection- failures.

According to an information recording-reproducing apparatus and method of this invention, the information recording-reproducing apparatus for information recording media where successively input predetermined number of control information is detected according to the synchronization timing based on the detection of sync information is capable of detecting a control information detection failure resulting from a sync information detection failure and starting a sync information redetection operation earlier.

## Claims

1. An information recording-reproducing apparatus for information recording media, wherein a control information sequence including sync information and predetermined number of control information is provided and the predetermined number of the control information that is successively input is detected according to the synchronization timing based on the detection of the sync information included in the control information sequence, the apparatus comprising:
at least one of a control information erroneous detection detector that detects erroneous detections of the control information and a sync information erroneous detection detector that detects erroneous detections of the sync information; and
a redetection operation judge section that performs redetection operations for the sync information based on the detection results of the erroneous detection by at least one of the control information erroneous detection detector and the sync information erroneous detection detector.

2. The information recording-reproducing apparatus according to claim 1, comprising the control information erroneous detection detector and the sync information erroneous detection detector, wherein:
erroneous detection of the control information means detection of the sync information during the period when the detection of the control information is expected;
erroneous detection of the sync information means detection of the control information during the period when the detection of the sync information is expected; and
the redetection operation judge section performs a redetection operation for the sync information when both of the control information erroneous detection detector and the sync information erroneous detection detector detect an erroneous detection.

3. The information recording-reproducing apparatus according claim 1, comprising the control information erroneous detection detector and the sync information erroneous detection detector,
wherein:
erroneous detection of the control information means failing to detect control information during the period when the detection of the control information is expected;
erroneous detection of the sync information means failing to detect sync information during the period when the detection of the sync information is expected; and
the redetection operation judge section performs a redetection operation for the sync information when both of the control information erroneous detection detector and the sync information erroneous detection detector detect an erroneous detection.

4. The information recording-reproducing apparatus according to claim 1, wherein the redetection operation judge section performs a redetection operation for the sync information when :
the control information erroneous detection detector detects an erroneous detection of the control information when the control information included in the control information sequence is detected; and
the sync information erroneous detection detector detects an erroneous detection of the sync information
included in the next control information sequence is detected.

5. The information recording-reproducing apparatus according to claim 1, comprising the control information erroneous detection detector,
wherein the redetection operation judge section performs a redetection operation for the sync information when:
the control information erroneous detection detector detects an erroneous detection of the control information, indicating that the control information is not detected during the period when the detection of the control information is expected, when the control information included in the control information sequence is detected; and
the control information erroneous detection detector detects an erroneous detection of the control information, indicating that the control information is detected during the period when the detection of the control information is not expected, when the sync information included in the next control information sequence is detected.

6. The information recording-reproducing apparatus according to claim 1, comprising the sync information erroneous detection detector,
wherein the redetection operation judge section performs a redetection operation for the sync information when :
the sync information erroneous detection detector detects an erroneous detection of the sync information, indicating that the sync information is detected during the period when the detection of the sync information is not expected, when the control information included in the control information sequence is detected; and
the sync information erroneous detection detector detects an erroneous detection of the sync information, indicating that the sync information is not detected during the period when the detection of the sync information is expected, when the sync information included in the next control information sequence is detected.

7. An information recording-reproducing apparatus for information recording media, wherein a control information sequence including sync information and predetermined number of control information is provided and the predetermined number of control information that is successively input is detected according to the synchronization timing based on the sync information included in the control information sequence, the apparatus comprising:
a sync information identifier that identifies ith ("i" is from 1 to N (N is a positive integer)) detected sync information as ith detected sync information when the sync information is detected N times when the control information included in one the control information sequence is detected;
an ith information register that stores predetermined number of successively input information according to the sync timing based on the ith detected sync information; and
an ith error correction circuit that is provided in each of the ith information registers and corrects the predetermined number of information which is held in the ith information register.

8. The information recording-reproducing apparatus according to claim 7, wherein the ith information register corresponding to the ith error correction circuit that corrected an error is selected and the ith detected sync information is the sync information.

9. The information recording-reproducing apparatus according to claim 7, comprising a redetection operation judge section that performs a redetection operation for the sync information when none of the ith error correction circuits correct an error.

10. An information recording-reproducing method for an information recording-reproducing apparatus for information recording media, wherein a control information sequence including sync information and predetermined number of control information is provided and successively input predetermined number of the control information is detected according to the sync timing based on the detection of the sync information included in the control information sequence, the method comprising:
at least one of a step of detecting an erroneous detection of the control information and a step of detecting an erroneous detection of the sync information; and
a step of performing a redetection operation for the sync information based on the result of detecting an erroneous detection by at least one of a step of detecting an erroneous detection of the control information and a step of detecting an erroneous detection of the sync information.

11. The information recording-reproducing method according to claim 10, comprising a step of detecting an erroneous detection of the control information and a step of detecting an erroneous detection of the sync information, wherein:
the erroneous detection of the control information means detection of the sync information during the period when the detection of the control information is expected;
the erroneous detection of the sync information means detection of the control information during the period when the detection of the sync information is expected; and
a step of performing a redetection operation for the sync information when an erroneous detection is detected in both the step of detecting an erroneous detection of the control information and the step of detecting an erroneous detection of the sync information, is performed.

12. The information recording-reproducing method according to claim 10, comprising a step of detecting an erroneous detection of the control information and a step of detecting an erroneous detection of the sync information, wherein :
the erroneous detection of the control information means failing to detect control information during the period when the detection of the control information is expected;
the erroneous detection of the sync information means failing to detect sync information during the period when the detection of the sync information is expected; and
a step of performing a redetection operation for the sync information when an erroneous detection is detected in both the step of detecting an erroneous detection of the control information and the step of detecting an erroneous detection of the sync information, is performed.

13. The information recording-reproducing method according to claim 10, wherein the step of performing a redetection operation is carried out when:
a step of detecting an erroneous detection of the control information detects an erroneous detection of the control information when the control information included in the control information sequence is detected; and
a step of detecting an erroneous detection of the sync information detects an erroneous detection of the sync information when the sync information included in the next the control information sequence is detected.

14. The information recording-reproducing method according to claim 10, comprising a step of detecting an erroneous detection of the control information,
wherein a step of performing a redetection operation for the sync information is performed when:
a step of detecting an erroneous detection of the control information detects an erroneous detection of the control information, indicating that the control information is not detected during the period when the detection of the control information is expected, when the control information included in the control information sequence is detected; and
a step of detecting an erroneous detection of the control information detects an erroneous detection of the control information, indicating that the control information is detected during the period when the detection of the control information is not expected, when the sync information included in the next control information sequence is detected.

15. The information recording-reproducing method according to claim 10, comprising a step of detecting an erroneous detection of the sync information,
wherein a step of performing a redetection operation for the sync information is performed when:
a step of detecting an erroneous detection of the sync information detects an erroneous detection of the sync information, indicating that the sync information is detected during the period when the detection of the sync information is not expected, when the control information included in the control information sequence is detected; and
a step of detecting an erroneous detection of the sync information detects an erroneous detection of the sync information, indicating that the sync information is not detected during the period when the detection of the sync information is expected, when the sync information included in the next control information sequence is detected.
